# EUROPÄISCHE PATENTANMELDUNG

(11) **EP 0 743 419 A1**
(43) Veröffentlichungstag der Anmeldung: **20.11.1996**
(21) Anmeldenummer: 96107232.9
(22) Anmeldetag: 08.05.1996
(51) Int. Cl.: E06B 3/96

(54) **Eckverbinder für Rahmenhohlprofile**

(30) Priorität: 15.05.1995 DE 29507825 U
(71) Anmelder: Karwoth, Werner, 58644 Iserlohn (DE)
(72) Erfinder: Karwoth, Werner, 58644 Iserlohn (DE)
(74) Vertreter: Eichler, Peter, Dipl.-Ing.

(57) **Zusammenfassung**

Eckverbinder (10) für Rahmenhohlprofile, insbesondere Metallprofile, mit zwei Winkelschenkeln (11,12), die von einer Gelenkachse (13) begrenzt schwenkbeweglich miteinander verbunden sind, die mit nur einem der Winkelschenkel (11) fest verbunden ist, wobei der andere Winkelschenkel (12) mit der Gelenkachse (13) in deren Achsrichtung (14) zusammensteckbar ist.

Um einen Eckverbinder mit den eingangs genannten Merkmalen so auszubilden, daß die Verbindungssicherheit verbessert wird, verbunden mit einer Verringerung des Aufwandes für den Zusammenbau und den Herstellungsaufwand des Eckverbinders, wird er so ausgebildet, daß der andere Winkelschenkel (12) in einer vorbestimmten Zusammensteckstellung mit der Gelenkachse (13) in einen axialen Formschluß verschwenkbar ist, bei dem ein Kupplungsvorsprung des anderen Winkelschenkels (12) in eine Kupplungsausnehmung des einen Winkelschenkels (11) eingreift.

## Beschreibung

Die Erfindung bezieht sich auf einen Eckverbinder für Rahmenhohlprofile, insbesondere Metallprofile, mit zwei Winkelschenkeln, die von einer Gelenkachse begrenzt schwenkbeweglich miteinander verbunden sind, die mit nur einem der Winkelschenkel fest verbunden ist, wobei der andere Winkelschenkel mit der Gelenkachse in deren Achsrichtung zusammensteckbar ist.

Ein Eckverbinder mit den vorgenannten Merkmalen ist aus der DE-U-88 02 109 bekannt. Er dient dazu, aneinanderstoßende Rahmenhohlprofile miteinander zu verbinden, so daß deren Relativlage gesichert werden kann. Die Schwenkbeweglichkeit der Winkelschenkel ermöglicht den Einsatz des Eckverbinders bei dem Verbinden von Rahmenhohlprofilen, von denen nicht bekannt ist, unter welchem Winkel sie aneinanderstoßen, oder bei denen bekannt ist, daß sie unter unterschiedlichen Winkeln zusammengebaut weden sollen. Insbesondere können solche Eckverbinder für spitzwinklig oder stumpfwinklig aneinanderstoßende Rahmenhohlprofile verwendet werden. Auch fluchtende Profile oder im rechten Winkel unter Gehrung aneinanderstoßende Profile können von solchen Eckverbindern miteinander verbunden werden. Bei dem bekannten Eckverbinder sind einander zugewendete Gelenkflächen mit mehreren einander benachbarten halbkreisförmigen Ausnehmungen versehen. Einander gegenüberliegende Ausnehmungen bilden eine Bohrung, in die ein Arretierstift eingesetzt werden kann. Der Arretierstift verhindert das Verschwenken der Winkelschenkel relativ zueinander und die Anordnung der halbkreisförmigen Ausnehmungen erlaubt eine nur stufenweise Winkeleinstellung der Winkelschenkel relativ zueinander, wobei einander benachbarte halbkreisförmige Ausnehmungen aus Festigkeitsgründen einen hinreichenden größeren Abstand voneinander haben müssen. Der bekannte Eckverbinder ist infolgedessen nur für konstruktiv vorbestimmte Eckwinkel geeignet, ohne daß herstellungs- und konstruktionsbedingte Toleranzen ausgeglichen werden könnten. Bei dem bekannten Eckverbinder bedeutet der Zusammenbau der beiden Winkelschenkel mit einem separaten Arretierstift einen erhöhten Herstellungsaufwand, bei dem insbesondere die Verbindungssicherheit der beiden Winkelschenkel dauerhaft gewährleistet sein muß, damit der separate Arretierstift nicht verloren geht.

Demgegenüber liegt der Erfindung die Aufgabe zugrunde, einen Eckverbinder mit den eingangs genannten Merkmalen so auszubilden, daß die Verbindungssicherheit verbessert wird, verbunden mit einer Verringerung des Aufwandes für den Zusammenbau und den Herstellungsaufwand des Eckverbinders.

Diese Aufgabe wird dadurch gelöst, daß der andere Winkelschenkel in einer vorbestimmten Zusammensteckstellung mit der Gelenkachse in einen axialen Formschluß verschwenkbar ist, bei dem ein Kupplungsvorsprung des anderen Winkelschenkels in eine Kupplungsausnehmung des einen Winkelschenkels eingreift.

Für die Erfindung ist von Bedeutung, daß die Gelenkachse und ihr zugehöriger Winkelschenkel fest miteinander verbunden sind. Sie bilden ein einheitliches Teil. Dieses Teil wird mit dem anderen Winkelschenkel durch bloßes Zusammenstecken zusammengebaut, wobei in einer vorbestimmten Zusammensteckstellung ein Verschwenken der beiden Winkelschenkel ermöglicht wird, so daß sich ein axialer Formschluß ergibt, bei dem die beiden Winkelschenkel nicht mehr voneinander zu trennen sind. Die hierbei zum Einsatz kommenden Kupplungsmittel, nämlich ein Kupplungsvorsprung und eine Kupplungsausnehmung, können in zweckmäßiger Weise ausgebildet, abgestimmt auf den Einsatzbereich des Eckverbinders, insbesondere auf die Schwenkwinkel, in denen der Eckverbinder für das Verbinden der Rahmenhohlprofile eingesetzt werden soll. Der Eckverbinder besteht demnach lediglich aus zwei zusammenzubauenden Teilen, die in allen Verbindungsfunktionsstellungen für Rahmenhohlprofile untrennbar miteinander verbunden sind, die aber in Achsrichtung der Gelenkachse in einfacher Weise auseinandergebaut werden können, wenn sich die beiden Winkelschenkel in ihrer Trennstellung befinden.

In vorteilhafter Weise, wird der Eckverbinder so ausgebildet, daß die Gelenkachse mit dem zugehörigen Winkelschenkel einstückig ausgebildet ist. Die Gelenkachse kann demgemäß mit dem zugehörigen Winkelschenkel in einem einzigen Herstellungsprozeß angefertigt werden, beispielsweise durch ein Gießverfahren. Ein besonderer Herstellungsvorgang für die Gelenkachse bzw. ein Verbindungsvorgang von Gelenkachse mit zugehörigem Winkelschenkel zum festen Verbinden beider entfällt.

Eine weitere Verbesserung des Eckverbinders wird dadurch erreicht, daß die Gelenkachse einer konzentrischen Stirnwand des zugehörigen Winkelschenkels mit Abstand benachbart ist, und daß der andere Winkelschenkel die Gelenkachse mit einem konzentrischen Haltelappen teilweise umgreift und damit im zwischen der Gelenkachse und der Stirnwand des zugehörigen Winkelschenkels gelegenen Abstandsraum schwenkbar ist. Durch diese Ausgestaltung wird zwischen der Gelenkachse und der Stirnwand des Winkelschenkels ein minimal bemessener Raum geschaffen, der für die Schwenkbewegung des anderen Winkelschenkels bzw. für den notwendigen Eingriff des Haltelappens des anderen Winkelschenkels erforderlich ist. Es ergibt sich eine gedrungene Konstruktion des Eckverbinders im Bereich der Gelenkachse, die festigkeitsmäßig optimiert werden kann.

Eine kompakte Ausgestaltung des Eckverbinders wird erreicht, wenn der Haltelappen des anderen Winkelschenkels den Kupplungsvorsprung und der halbkreisförmige Steg die Kupplungsausnehmung bildet. Zugleich ergeben sich optimal große Querschnitte, was vorteilhaft im Sinne einer hohen Festigkeit der Winkelschenkel im Verbindungsbereich ist.

Um den durch das Rahmenhohlprofil zur Verfügung gestellten Hohlkammerquerschnitt im Sinne einer möglichst großen Festigkeit des Eckverbinders im Gelenkbereich ausnutzen zu können, sind der Haltelappen und der halbkreisförmige Steg jeweils etwa so breit wie der zugehörige Winkelschenkel. Es wird gewährleistet, daß die Rahmenhohlprofile unter Außenumfassung aller Teile des Eckverbinders dicht aneinanderstoßen können.

Der Eckverbinder kann so ausgestaltet werden, daß der Kupplungsvorsprung ein teilkreisförmiger Zapfen ist, der etwa bis auf die Dicke des halbkreisförmigen Stegs in Richtung auf den anderen Winkelschenkel vorspringt. Dadurch ergibt sich eine optimale Umfassung der Gelenkachse durch den Kupplungsvorsprung des zugehörigen Winkelschenkels, so daß der Winkelbereich möglichst groß ist, in dem der Eckverbinder zur Verbindung von Rahmenhohlprofilen eingesetzt werden kann.

Wenn die Kupplungsausnehmung ein sägeschnittähnlicher Längsschlitz im halbkreisförmigen Steg ist, so kann die Kupplungsausnehmung auf einfache Weise hergestellt werden und ist ausreichend großvolumig, beispielsweise um dem Kupplungsvorsprung den erforderlichen Bewegungsraum zu geben.

Der Eckverbinder kann so ausgestaltet werden, daß der eine Winkelschenkel in seiner dem anderen Winkelschenkel benachbarten Längswand eine konkave Ausnehmung hat, in die bei spitzwinklig geschwenkten Winkelschenkeln eine konvexe Wölbung einer Längswand des anderen Winkelschenkels paßt. Es wird erreicht, daß die beiden Winkelschenkel in sehr spitzem Winkel dicht nebeneinander angeordnet werden können, was vorteilhaft im Sinne einer geringen Packungsgröße ist und dazu beiträgt, daß der Eckverbinder auch bei sehr spitzwinklig angeordneten Rahmenhohlprofilen ohne weiteres verbindungswirksam eingesetzt werden kann, weil die Trennsteilung der beiden Winkelschenkel noch nicht erreicht ist.

Im Sinne eines Leichtbaus wird der Eckverbinder so ausgebildet, daß die Winkelschenkel aus gelenkachsparallelen Stegen bestehen, und daß die Dicken dieser Stege, des halbkreisförmigen Stegs und des Haltelappens etwa gleich groß sind. Die in etwa gleiche Größe bzw. Dicke aller Stege der Winkelschenkel und ihrer Bauteile im Verbindungsbereich führt zu einer Minimierung des Werkstoffaufwands unter Gewährleistung einer optimalen Festigkeit, ohne daß ein Bereich der Winkelschenkel überdimensioniert wäre, insbesondere bei metallenen Eckverbindern.

Die Erfindung wird anhand eines in der Zeichnung dargestellten Ausführungsbeispiels erläutert. Es zeigt:

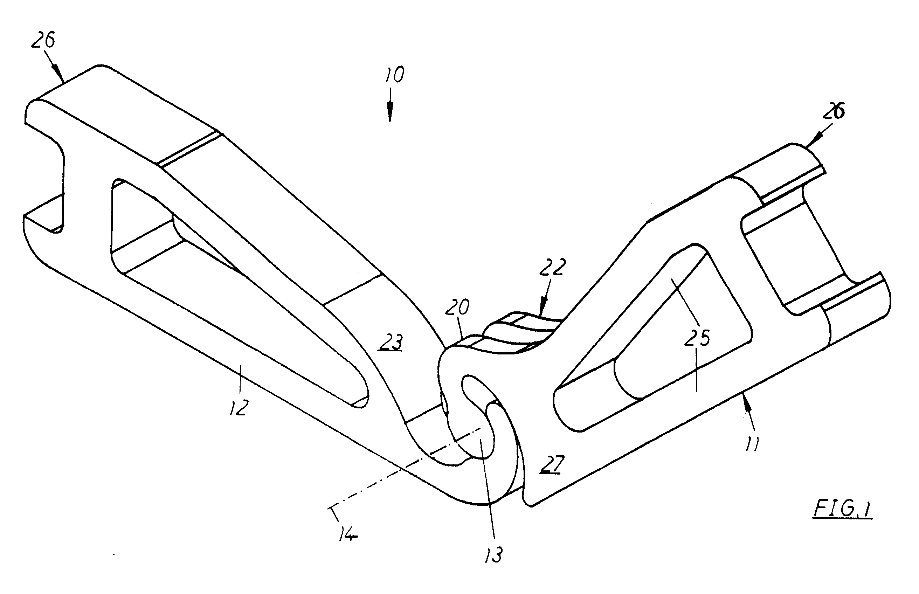

- Fig.1: eine perspektivische Ansicht eines Eckverbinders,
- Fig.2: eine Seitenansicht des Eckverbinders der Fig.1 in abweichender Winkelstellung der Winkelschenkel,
- Fig.3,4: die Seitenansicht der Winkelschenkel der Fig.1,2 einzeln, und
- Fig.5,6: perspektivische Darstellungen der Winkelschenkel der Fig.3,4.

Der Eckverbinder 10 besteht im wesentlichen aus den beiden Winkelschenkeln 11,12, die mit ihren Enden 26 voran in je eine Hohlkammer eines Rahmenhohlprofils hineingesteckt werden, soweit es geht. Dabei stoßen die beiden Profile aneinander. Damit sich eine ansehnliche Rahmenecke ergibt, sind die Enden der Rahmenhohlprofile entsprechend zugeschnitten. Sie weisen in üblicher Weise eine Gehrung auf, deren Ausführung davon abhängt, ob die Rahmenhohlprofile im rechten Winkel, in einem stumpfen Winkel oder in einem spitzen Winkel zusammenstoßen. Hierdurch wird jeweils erreicht, daß die in den Hohlkammern der Rahmenhohlprofile untergebrachten Winkelschenkel 11,12 in der Außenansicht des Rahmens bzw. des Eckbereichs des Rahmens nicht zu sehen sind. Zur Befestigung der Winkelschenkel 11,12 in den nicht dargestellten Rahmenhohlprofilen können herkömmliche Befestigungstechniken eingesetzt werden, wie z.B. die Verschraubung der Winkelschenkel an den Enden der Rahmenhohlprofile oder deren Verklebung mit den Rahmenhohlprofilen.

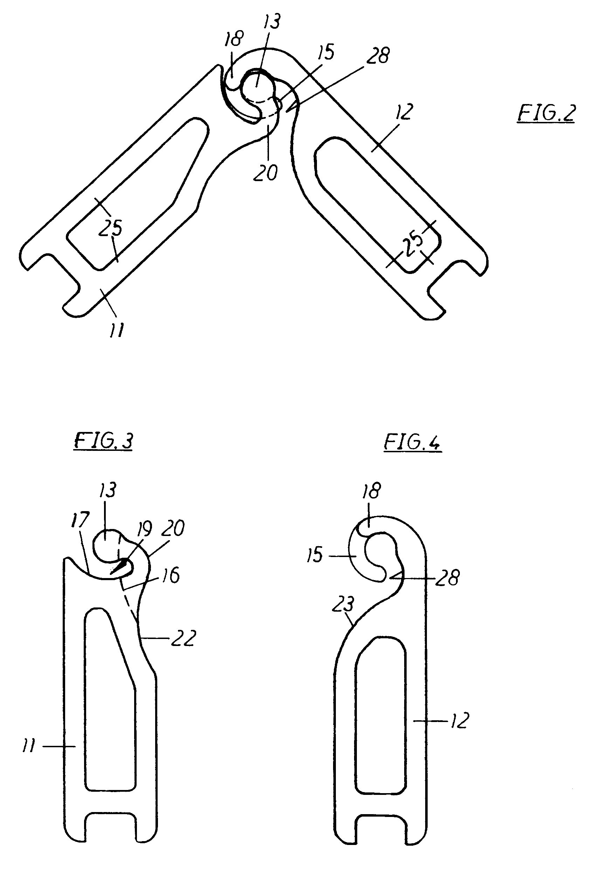

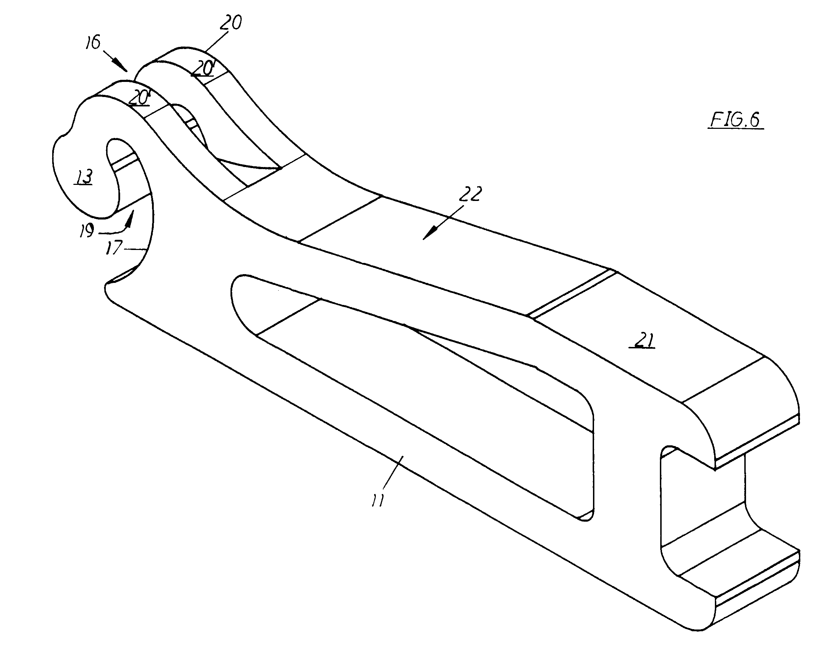

Damit der Eckverbinder 10 seine Funktion bei der Verbindung von Enden der Rahmenhohlprofile erfüllen kann, müssen die Winkelschenkel 11,12 miteinander verbunden werden. Hierzu dient eine Gelenkachse 13. Die Gelenkachse 13 ist mit dem Winkelschenkel 11 fest verbunden, und zwar im Sinne einer starren Verbindung durch einstückige Ausgestaltung von Winkelschenkel 11 und Gelenkachse 13. Dabei ist die Gelenkachse 13 mit Abstand zur benachbarten Stirnwand 17 des Winkelschenkels 11 angeordnet, wie sich insbesondere aus den Fig.3 und 6 ergibt. Die Gelenkachse 13 ist mit ihrer Mittelachse bzw. Achsrichtung 14 etwa in der in Fig.3 senkrecht zur Darstellungsebene stehenden Mittelebene des Winkelschenkels 11 angeordnet und mit diesem durch einen Steg 20 verbunden. Der Steg 20 hat einen etwa halbkreisförmigen Querschnitt und erstreckt sich senkrecht zur Darstellungsebene der Fig.3 zwischen den parallelen Außenwänden 27 des Winkelschenkels 11. Seine Aussenwände 27 haben also, ebenso wie die Stirnflächen der Gelenkachse 13, denselben Abstand voneinander. Dieser Abstand ist auf die entsprechende lichte Weite der Hohlkammer des Rahmenhohlprofils abgestimmt.

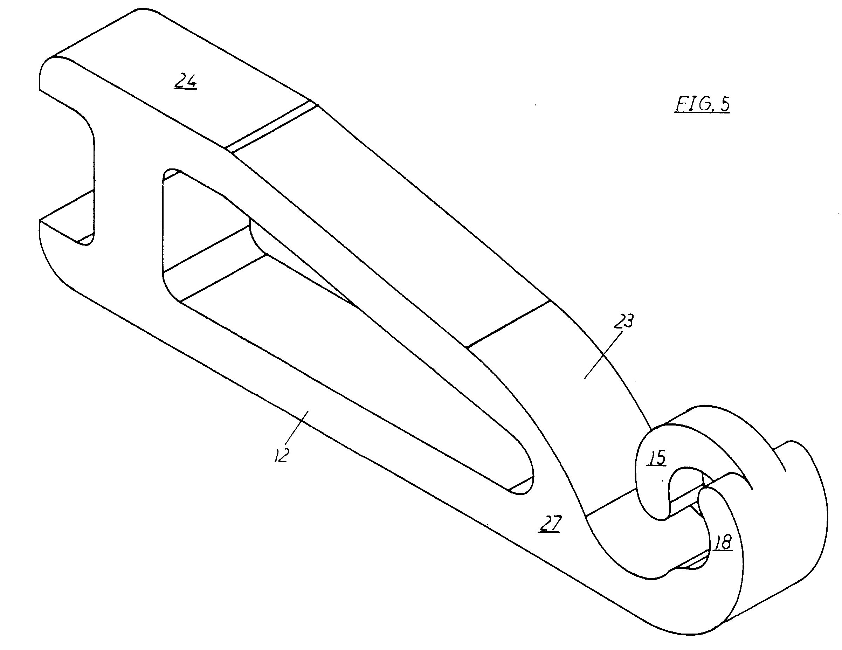

Die Gelenkachse 13 hat im wesentlichen kreisförmigen Querschnitt und die ihr benachbarte Stirnwand 17 ist entsprechend teilkreisförmig ausgebildet, so daß sich der zwischen beiden ergebende Abstandsraum 19 etwa parallele Begrenzungswände aufweist. In den Abstandsraum 19 kann der andere Winkelschenkel 12 mit einem Haltelappen 18 eingreifen der in seiner Querschnittsbemessung an den Abstandsraum 19 angepaßt ist, also im wesentlichen teilkreis- bzw. teilringförmig profiliert ist. Fig.2 zeigt den teilweisen Eingriff des Haltelappens 18 in den Abstandsraum 19 bei im rechten Winkel zueinander angeordneten Winkelschenkeln 11,12. Der Haltelappen 18 dient dem Zusammenhalt der beiden Winkelschenkel 11,12. Er umfaßt die Gelenkachse 13 teilweise. Dabei bildet er einen Kupplungsvorsprung 15, der im wesentlichen zapfenartig ist, wie sich anschaulich aus Fig.5 entnehmen läßt.

Der Kupplungsvorsprung 15 ist dem Haltelappen 18 bzw. dem Abstandsraum 19 entsprechend teilkreis- bzw. teilringförmig ausgebildet und hat von der Stirnwand 28 des Winkelschenkels 12 einen nur geringen Abstand, so daß er quasi ein Gelenkauge bildet. Der Abstand des Endes des Kupplungsvorsprungs 15 von der Stirnwand 28 des Winkelschenkels 12 entspricht der Dicke des halbkreisförmigen Stegs 20, die etwas geringer ist, um die freie Schwenkbeweglichkeit der Kupplungsmittel zu garantieren.

Der Steg 20 hat zum Eingriff des Kupplungsvorsprungs 15 eine Kupplungsausnehmung 16, die von einem sägeschnittähnlichen Längsschlitz gebildet ist und den Steg 20 in zwei Hälften 20' unterteilt, die jeweils gleich ausgebildet sind. Zwischen diesen Hälften 20' bzw. im Steg 20 ist daher eine Kupplungsausnehmung 16 gebildet, die bei eingreifendem Kupplungsvorsprung einen axialen Formschluß bildet, also einen Formschluß in Achsrichtung 14 der Gelenkachse 13. Derart zusammengebaute Winkelschenkel 11,12 können nicht versehentlich getrennt werden.

Die Winkelschenkel 11,12 sind aus Stegen 25 aufgebaut, die etwa alle dieselbe Dicke haben. Diese Stege 25 bilden mit ihren Schmalseiten die Außenwände 27 und mit ihren dazu senkrechten Breitseiten die Längswände 24, vgl. z.B. Fig.5. Die Stege 25 können die Stabilität der Winkeschenkel 11,12 ohne weiteres gewährleisten. Infolge der zwischen ihnen entsprechend vorhandenen Hohlräume wird Werkstoff gespart, was insbesondere von Bedeutung ist, wenn der Eckverbinder 10 aus Metall besteht, was im Hinblick auf die im Gelenkbereich gewünschte Festigkeit zweckmäßig ist.

Die Winkelschenkel 11,12 des Eckverbinders 10 können beispielsweise aus der in Fig.2 dargestellten Lage zusammengeschwenkt werden. Sie sind dazu so ausgebildet, daß sie dann einen möglichst spitzen Winkel bilden. Der Winkelschenkel 11 hat hierzu eine konkave Ausnehmung 22, die auf eine entsprechend konvexe Wölbung 23 des Winkelschenkels 12 abgestimmt ist. Wenn die Winkelschenkel 11,12 so zusammengeklappt werden, daß die Wölbung 23 in der Ausnehmung 22 liegt, ist der Kupplungsvorsprung 15 entsprechend verschwenkt. Er befindet sich zwar immernoch im Abstandsraum 19, jedoch außerhalb der Kupplungsausnehmung 16. Das ergibt sich daraus, daß die Breite des Stegs 20 etwas geringer ist, als der Abstand des Kupplungsvorsprungs 15 von der ihm gegenüberliegenden Stirnwand 28. Infolgedessen können die beiden Winkelschenkel 11,12 voneinander getrennt werden, indem sie relativ zueinander in der Achsrichtung 14 ihrer Gelenkachse verschoben werden. Sie werden dann voneinander getrennt. Umgekehrt ist ein entsprechender Zusammenbau leicht möglich.

Es ergibt sich, daß der Eckverbinder lediglich aus zwei Teilen besteht, nämlich dem Winkelschenkel 12 und dem mit der Gelenkachse 13 versehenen Winkelschenkel 11, die ohne Werkzeug zusammengebaut werden können, nämlich durch bloßes Zusammenstecken in der Achsrichtung 14. Wenn sich der Kupplungsvorsprung 15 bei diesem Zusammenstecken in Achsrichtung 14 auf Höhe der Kupplungsausnehmung 16 befindet, können die beiden Winkelschenkel 11,12 relativ zueinander verschwenkt werden, so daß der Kupplungsvorsprung 15 in die Kupplungsausnehmung 16 einschwenkt und ein in Achsrichtung wirksamer Formschluß erreicht wird, durch den die beiden Winkelschenkel 11,12 zusammenhalten.

## Patentansprüche

1. Eckverbinder (10) für Rahmenhohlprofile, insbesondere Metallprofile, mit zwei Winkelschenkeln (11,12), die von einer Gelenkachse (13) begrenzt schwenkbeweglich miteinander verbunden sind, die mit nur einem der Winkelschenkel (11) fest verbunden ist, wobei der andere Winkelschenkel (12) mit der Gelenkachse (13) in deren Achsrichtung (14) zusammensteckbar ist**, dadurch gekennzeichnet,** daß der andere Winkelschenkel (12) in einer vorbestimmten Zusammensteckstellung mit der Gelenkachse (13) in einen axialen Formschluß verschwenkbar ist, bei dem ein Kupplungsvorsprung (15) des anderen Winkelschenkels (12) in eine Kupplungsausnehmung (16) des einen Winkelschenkels (11) eingreift.

2. Eckverbinder (10) nach Anspruch 1, **dadurch gekennzeichnet,** daß die Gelenkachse (13) mit dem zugehörigen Winkelschenkel (11) einstückig ausgebildet ist.

3. Eckverbinder (10) nach Anspruch 1 oder 2, **dadurch gekennzeichnet,** daß die Gelenkachse (13) einer konzentrischen Stirnwand (17) des zugehörigen Winkelschenkels (11) mit Abstand benachbart ist, und daß der andere Winkelschenkel (12) die Gelenkachse (13) mit einem konzentrischen Haltelappen (18) teilweise umgreift und damit im zwischen der Gelenkachse (13) und der Stirnwand (17) des zugehörigen Winkelschenkels (11) gelegenen Abstandsraum (19) schwenkbar ist.

4. Eckverbinder (10) nach einem der Ansprüche 1 bis 3, **dadurch gekennzeichnet,** daß die Gelenkachse (13) mit dem zugehörigen Winkelschenkel (11) mittels eines Stegs (20) etwa halbkreisförmigen Querschnitts verbunden ist.

5. Eckverbinder (10) nach einem der Ansprüche 1 bis 4, **dadurch gekennzeichnet,** daß der Haltelappen (18) des anderen Winkelschenkels (12) den Kupplungsvorsprung (15) und der halbkreisförmige Steg (20) die Kupplungsausnehmung (16) bildet.

6. Eckverbinder (10) nach einem der Ansprüche 1 bis 5, **dadurch gekennzeichnet,** daß der Haltelappen (18) und der halbkreisförmige Steg (20) jeweils etwa so breit wie der zugehörige Winkelschenkel (11,12) sind.

7. Eckverbinder (10) nach einem der Ansprüche 1 bis 6, **dadurch gekennzeichnet,** daß der Kupplungsvorsprung (15) ein teilkreisförmiger Zapfen ist, der etwa bis auf die Dicke des halbkreisförmigen Stegs (20) in Richtung auf den anderen Winkelschenkel (12) vorspringt.

8. Eckverbinder (10) nach einem der Ansprüche 1 bis 7, **dadurch gekennzeichnet,** daß die Kupplungsausnehmung (16) ein sägeschnittähnlicher Längsschlitz im halbkreisförmigen Steg (20) ist.

9. Eckverbinder (10) nach einem der Ansprüche 1 bis 8, **dadurch gekennzeichnet,** daß der eine Winkelschenkel (11) in seiner dem anderen Winkelschenkel (12) benachbarten Längswand (21) eine konkave Ausnehmung (22) hat, in die bei spitzwinklig geschwenkten Winkelschenkeln (11,12) eine konvexe Wölbung (23) einer Längswand (24) des anderen Winkelschenkels (12) paßt.

10. Eckverbinder (10) nach einem der Ansprüche 1 bis 9, **dadurch gekennzeichnet,** daß die Winkelschenkel (11,12) aus gelenkachsparallelen Stegen bestehen, und daß die Dicken dieser Stege (25), des halbkreisförmigen Stegs (20) und des Haltelappens (18) etwa gleich groß sind.
